(19) **Europäisches Patentamt / European Patent Office / Office européen des brevets**

(11) **EP 4 081 555 B1**

(12) **FASCICULE DE BREVET EUROPEEN**

(45) Date de publication et mention
de la délivrance du brevet:
**25.02.2026   Bulletin 2026/09**

(21) Numéro de dépôt: **20833829.3**

(22) Date de dépôt: **17.12.2020**

(51) Classification Internationale des Brevets (IPC):
*C08B 15/04* (2006.01)      *C08H 8/00* (2010.01)
*C08L 1/04* (2006.01)      *D21C 9/12* (2006.01)
*C08J 5/18* (2006.01)      *D21C 9/10* (2006.01)
*D21H 11/18* (2006.01)

(52) Classification Coopérative des Brevets (CPC):
**C08B 15/04; C08H 8/00; C08L 1/04; D21C 9/1026;
D21C 9/1063; D21C 9/123; D21H 11/18;
Y02P 20/584**

(86) Numéro de dépôt international:
**PCT/EP2020/086776**

(87) Numéro de publication internationale:
**WO 2021/130102 (01.07.2021 Gazette 2021/26)**

(54) **PROCÉDÉ D'OXYDATION CATALYTIQUE DE PÂTE CELLULOSIQUE**

VERFAHREN ZUR KATALYTISCHEN OXIDATION VON CELLULOSEPASTE

PROCESS FOR CATALYTICALLY OXIDISING CELLULOSE PASTE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.12.2019   FR 1915494**

(43) Date de publication de la demande:
**02.11.2022   Bulletin 2022/44**

(73) Titulaires:
• **Institut Polytechnique de Grenoble
  38000 Grenoble (FR)**
• **Centre national de la recherche scientifique
  75016 Paris (FR)**
• **Université Grenoble Alpes
  38400 Saint-Martin-d'Hères (FR)**

(72) Inventeurs:
• **LUCAS, Dollie
  40990 SAINT-PAUL-LES-DAX (FR)**
• **MORTHA, Gérard
  73800 LAISSAUD (FR)**
• **MARLIN-DIETEMANN, Nathalie
  SAINT MARTIN D  38400 (FR)**

(74) Mandataire: **Hautier IP
20, rue de la Liberté
06000 Nice (FR)**

(56) Documents cités:
**WO-A1-2014/091086      JP-A- 2008 308 802
JP-A- 2017 160 396**

• **PUANGSIN BUAPAN ET AL: "Characterization of
cellulose nanofibrils prepared by direct TEMPO-
mediated oxidation of hemp bast", CELLULOSE,
SPRINGER NETHERLANDS, NETHERLANDS,
vol. 24, no. 9, 3 July 2017 (2017-07-03), pages
3767 - 3775, XP036296049, ISSN: 0969-0239,
[retrieved on 20170703], DOI: 10.1007/
S10570-017-1390-Y**
• **TIMO PÄÄKKÖNEN ET AL: "Activation of TEMPO
by ClO 2 for oxidation of cellulose by
hypochlorite-Fundamental and practical aspects
of the catalytic system", CARBOHYDRATE
POLYMERS, vol. 174, 1 October 2017
(2017-10-01), GB, pages 524 - 530, XP055592054,
ISSN: 0144-8617, DOI: 10.1016/
j.carbpol.2017.06.117**

EP 4 081 555 B1

**Description**

**DOMAINE TECHNIQUE**

La présente invention concerne le domaine des procédés d'oxydation de la cellulose. Elle trouve pour application particulièrement avantageuse le domaine de la production de cellulose microfibrillée.

**ETAT DE LA TECHNIQUE**

La cellulose est un polymère renouvelable pouvant être extrait sous forme de fibres de cellulose à partir de pâtes cellulosiques issues du bois. Les fibres de celluloses peuvent ensuite être converties en de nombreuses espèces dérivées. Plus particulièrement, ces fibres peuvent être utilisées pour produire de la cellulose microfibrillée, aussi appelée nanocellulose. La cellulose microfibrillée est un bioproduit, de très haute valeur ajoutée, pouvant être utilisé industriellement sous forme de films transparents ou encore d'additifs solides. La cellulose microfibrillée est biodégradable, présente de bonnes propriétés mécaniques ainsi que des propriétés barrières à l'eau et à l'oxygène, ce qui en fait un ingrédient de choix dans la formulation de matériaux biosourcés, par exemple pour la fabrication d'emballage ou en cosmétique.

Les microfibrilles de cellulose sont des faisceaux de quelques dizaines de chaînes de cellulose, assemblés dans une fibre de cellulose. La cellulose microfibrillée est donc obtenue par la déconstruction de la fibre de cellulose, pour récupérer une suspension de microfibrilles de polymère. Aujourd'hui, la cellulose microfibrillée est issue de traitements mécaniques, aussi appelés nanobroyage, de fibres de cellulose issues d'un substrat cellulosique, en général extrait de la biomasse. L'énergie consommée dans ces traitements est importante, augmentant par conséquent leur coût, ce qui freine la production à l'échelle industrielle de la cellulose microfibrillée.

Afin de diminuer la consommation énergétique des procédés de transformation de la cellulose, des prétraitements chimiques sont effectués sur la fibre de cellulose afin de faciliter sa déconstruction. Ces prétraitements consistent plus particulièrement à oxyder sélectivement les groupements hydroxyles présents en C-6 dans les unités de glucopyranose de la cellulose, pour les unités de glucopyranose accessibles à la surface des microfibrilles. Plus particulièrement, ces groupements hydroxyles sont oxydés en groupements carbonyles, puis en groupements carboxyles, permettant ainsi de perturber les interactions entre microfibrilles pour fragiliser la structure de la fibre de cellulose.

Les catalyseurs nitroxyles hétérocycliques sont connus pour réaliser une oxydation sélective de ces groupements hydroxyles. Par exemple, le radical (2,2,6,6-tétraméthylpipéridin-1-yl)oxy, désigné TEMPO, peut être activé sous sa forme oxydée, désignée TEMPO-ox, pour la mise en œuvre de procédés d'oxydation catalytique de fibres de cellulose dans une pâte cellulosique.

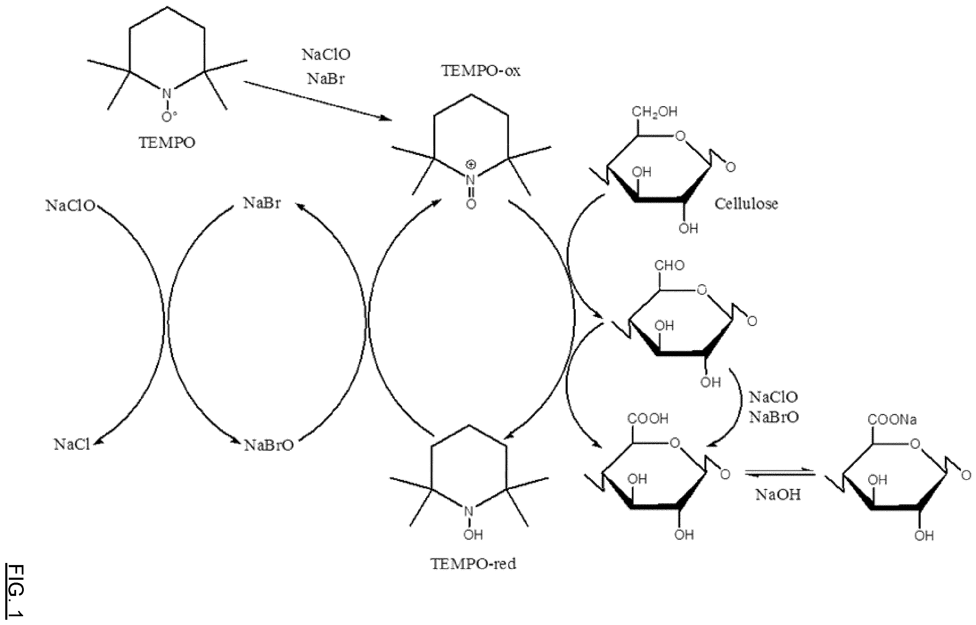

Il est notamment connu du document A. Isogai et al., TEMPO-oxidized cellulose nanofibers, Nanoscale, 3(1), p.71-85, 2011, un procédé d'oxydation catalytique d'une pâte cellulosique mettant en œuvre le catalyseur TEMPO, le bromure de sodium et l'hypochlorite de sodium. Les réactions chimiques mises en jeu dans ce procédé sont illustrées en figure 1. Le TEMPO est oxydé en TEMPO-ox par l'hypochlorite de sodium. TEMPO-ox permet alors d'oxyder les groupements hydroxyles présents en C-6 en groupements carbonyles. Les groupements carbonyles peuvent être à leur tour oxydés par TEMPO-ox, par l'hypochlorite, ou par de l'hypobromite issu de la réaction entre l'hypochlorite de sodium et le bromure de sodium. Lors de l'oxydation de ces groupements, le TEMPO-ox est réduit en TEMPO-red. Afin de régénérer le catalyseur, le TEMPO-red est oxydé par l'hypobromite pour reformer le TEMPO-ox.

Ce procédé présente toutefois l'inconvénient d'utiliser du bromure de sodium, un produit cher et polluant. Lors de la mise en œuvre de ce procédé, le bromure de sodium peut en outre former des organohalogénures par des réactions secondaires. Ces organohalogénures sont des espèces toxiques, bioaccumulables, et qui augmentent le coût du traitement des effluents issus de ce procédé.

Le bromure de sodium peut être remplacé par d'autres oxydants. Il est notamment connu du document WO 2014/091086 A1, un procédé d'oxydation catalytique de fibres de cellulose utilisant un radical nitroxyle hétérocyclique comme catalyseur, du dioxyde de chlore pour activer le radical nitroxyle hétérocyclique, ainsi que l'hypochlorite de sodium pour la régénération du catalyseur. Suite à l'oxydation des groupements hydroxyles présents en C-6, des groupements carbonyles peuvent subsister. Afin de compléter l'oxydation de ces groupements hydroxyles en groupements carboxyles, ce procédé peut comprendre une étape d'acidification, lors de laquelle du chlorite de sodium est ajouté.

Les procédés décrits plus hauts sont notamment connus pour s'appliquer à des pâtes cellulosiques blanchies issues de procédés Kraft ou de pâtes de spécialités, et non directement à de la pâte écrue, dans laquelle les fibres de cellulose, ou de façon équivalente fibres cellulosiques, sont lignifiées, et donc comprennent de la lignine.

Dans ce contexte, la présente invention propose un procédé d'oxydation catalytique d'une pâte cellulosique permettant de pallier au moins un des inconvénients précités.

Plus particulièrement, un objet de la présente invention est donc de proposer un procédé permettant l'oxydation des fibres de cellulose d'une pâte cellulosique écrue. Un autre objet de la présente invention est de proposer un procédé permettant l'oxydation des fibres de cellulose d'une pâte cellulosique écrue en un nombre réduit d'étapes. Le procédé selon l'invention vise en outre à limiter le coût et/ou l'impact environnemental des prétraitements chimiques de la fibre de cellulose.

Un autre objet de la présente invention est de proposer un procédé de production de cellulose microfibrillée à partir d'une pâte cellulosique écrue, de préférence en un nombre réduit d'étapes. Le procédé selon l'invention vise en outre à limiter le coût et/ou l'impact environnemental de la production de cellulose microfibrillée.

Les autres objets, caractéristiques et avantages de la présente invention apparaîtront à l'examen de la description suivante et des dessins d'accompagnement. Il est entendu que d'autres avantages peuvent être incorporés.

**RESUME**

Pour atteindre cet objectif, selon un mode de réalisation, on prévoit un procédé d'oxydation catalytique d'une pâte cellulosique écrue, le procédé comprenant les étapes suivantes :

- Fournir, dans un réacteur, une pâte cellulosique écrue, la pâte cellulosique écrue comprenant des fibres cellulosiques lignifiées ;
- Fournir, dans le réacteur, un radical nitroxyle hétérocyclique ;
- Fournir, dans le réacteur, du dioxyde de chlore de façon à former un milieu réactionnel, le pH du milieu réactionnel étant supérieur à 7, le dioxyde de chlore étant fourni en excès, de préférence un excès molaire, par rapport au radical nitroxyle hétérocyclique de façon à :

  o induire une activation du radical nitroxyle hétérocyclique par le dioxyde de chlore, par conversion du radical nitroxyle hétérocyclique en un cation nitrosonium hétérocyclique ; et
  o induire dans le milieu réactionnel une délignification au moins partielle de la pâte cellulosique écrue par réaction entre la lignine et le dioxyde de chlore ;

- Fournir, au milieu réactionnel, suite à l'activation du radical nitroxyle hétérocyclique par le dioxyde de chlore, un hypochlorite de façon à induire une oxydation catalytique des fibres de cellulose par le cation nitrosonium hétérocyclique ;
- Récupérer, à l'issue de l'oxydation catalytique des fibres de cellulose, les fibres de cellulose oxydées et au moins partiellement délignifiées.

Le procédé selon ces caractéristiques allie la délignification d'une pâte cellulosique écrue et l'oxydation catalytique des fibres de cellulose, par oxydation des groupements hydroxyles présents en C-6, en groupements carbonyles, puis en groupements carboxyles. Ainsi, le procédé permet d'éviter une étape de délignification de la pâte cellulosique écrue préalable à la mise en œuvre du procédé d'oxydation catalytique. Une telle étape de délignification impliquant généralement l'ajout de réactifs chimiques ainsi que des lavages, le procédé permet en outre de limiter le volume d'effluent à traiter. Ainsi, le coût et l'impact environnemental du procédé selon le premier aspect de l'invention est réduit par rapport aux procédés d'oxydation catalytique connus.

De préférence, le procédé est en outre exempt d'une étape de lavage entre l'étape dans laquelle le radical nitroxyle hétérocyclique est fourni et l'étape dans laquelle l'hypochlorite est fourni. Le procédé peut, de façon alternative ou complémentaire, être exempt d'une étape de lavage entre l'étape dans laquelle le dioxyde de chlore est fourni et entre l'étape dans laquelle l'hypochlorite est fourni.

De manière facultative, le procédé peut en outre présenter au moins l'une quelconque des caractéristiques additionnelles suivantes, qui peuvent éventuellement être utilisées en association ou alternativement.

Le dioxyde de chlore peut être fourni dans une quantité molaire de matière $n_1$ sensiblement supérieure ou égale à la somme de la quantité molaire de matière $n_2$ du radical nitroxyle hétérocyclique, et d'une quantité molaire de matière proportionnelle au taux de lignine de la pâte cellulosique écrue.

Le dioxyde de chlore peut être fourni dans une quantité molaire de matière $n_1$ sensiblement supérieure ou égale à la somme de la quantité molaire de matière $n_2$ du radical nitroxyle hétérocyclique, et d'une quantité molaire de matière proportionnelle à l'indice kappa de la pâte cellulosique écrue. L'ajout d'une quantité molaire de matière de dioxyde de chlore proportionnelle à l'indice kappa de la pâte cellulosique écrue, permet d'adapter l'excès de dioxyde de chlore au taux de lignine de la pâte cellulosique écrue. Afin de déterminer la quantité molaire de matière $n_1$ du dioxyde de chlore à fournir au milieu réactionnel, le procédé peut comprendre en outre une étape de mesure de l'indice kappa de la pâte cellulosique écrue. De façon alternative, l'indice kappa peut être renseigné par le fournisseur de la pâte cellulosique écrue

De préférence, la quantité molaire de matière $n_1$ de dioxyde de chlore fourni peut être sensiblement supérieure ou égale à, en mmol/g de pâte cellulosique écrue sèche :

$$n_2 + \left( \frac{Ex \times F \times A}{B \times M_{ClO2}} \times I_k \right)$$

$I_k$ correspondant à l'indice kappa de la pâte cellulosique écrue, Ex correspondant à un facteur d'excès compris entre 1 et 3,5, F correspondant au facteur chlore, F étant compris entre 0,1 et 0,5, de préférence entre 0,2 et 0,4, A étant un facteur de conversion d'unité égal à 10, B étant une constante égale à 2,63 et $M_{ClO2}$ correspondant à la masse molaire du dioxyde de chlore exprimée en g/mol, et plus particulièrement $M_{ClO2}$ = 67,5 g/mol.

Ainsi, la quantité molaire de matière n1 du dioxyde de chlore est déterminée de façon à favoriser une délignification quantitative de la pâte cellulosique écrue, en fonction de son taux de lignine. De préférence, le facteur chlore F est sensiblement égal à 0,3. De préférence, le facteur d'excès est compris entre 2 et 3,5. Plus préférentiellement, la quantité molaire de matière n1 de dioxyde de chlore fourni au milieu réactionnel est sensiblement égale à la valeur déterminée par la formule ci-dessus. Ainsi, un risque de surdosage du dioxyde de chlore est limité. Un tel surdosage pouvant induire une dégradation des fibres de cellulose, lorsque la pâte cellulosique est délignifiée, l'on évite ainsi ce phénomène. Pour cela, plus préférentiellement encore, la quantité molaire de matière n1 de dioxyde de chlore fourni au milieu réactionnel est sensiblement égale à la valeur déterminée par la formule ci-dessus, avec Ex = 3,5 et F = 0,5.

En outre, le taux de lignine est de préférence sensiblement compris entre 1 et 10 % de la masse sèche de la pâte cellulosique. L'indice kappa de la pâte cellulosique écrue est de préférence compris entre 6 et 60. Il est en effet avantageux de limiter le taux de lignine de la pâte cellulosique écrue afin de limiter la quantité molaire de matière de dioxyde de chlore fourni au milieu réactionnel. Ainsi, le risque de polychloration des composés organiques dans le milieu réactionnel est minimisé, voire évité. L'impact environnemental du procédé peut ainsi être encore réduit.

Le radical nitroxyle hétérocyclique et le dioxyde de chlore peuvent être mélangés entre eux avant d'être fournis dans le réacteur. Ainsi, le radical nitroxyle hétérocyclique et le dioxyde de chlore sont mélangés entre eux avant que le dioxyde de chlore réagisse avec la lignine de la pâte cellulosique écrue. Une activation quantitative, voire totale, du radical nitroxyle hétérocyclique est ainsi favorisée. De préférence, le mélange est réalisé à une température comprise entre 20 °C et 50 °C. Plus préférentiellement, le mélange est réalisé à température ambiante.

Par ailleurs, l'hypochlorite peut être fourni après que la délignification de la pâte cellulosique écrue, par réaction entre la lignine et le dioxyde de chlore, a atteint son équilibre. Le procédé selon cette caractéristique permet de favoriser la réaction de délignification, tout en limitant l'impact environnemental du procédé.

Lorsque le dioxyde de chlore est fourni, et plus particulièrement lors de l'activation du radical nitroxyle hétérocyclique par le dioxyde de chlore et de la délignification au moins partielle de la pâte cellulosique écrue, le pH du milieu réactionnel est de préférence compris entre 8 et 11. En outre, lors de l'oxydation catalytique des fibres de cellulose, le pH du milieu réactionnel peut être régulé à une valeur comprise entre 8 et 11. Cette gamme de pH permet de favoriser les réactions d'activation du radical nitroxyle hétérocyclique, de délignification par le dioxyde de chlore, et d'oxydation catalytique des fibres de cellulose.

De préférence, le pH du milieu réactionnel est compris entre 9 et 10,5, et plus préférentiellement sensiblement égal à 10, lorsque le dioxyde de chlore est fourni, et plus particulièrement lors de l'activation du radical nitroxyle hétérocyclique par le dioxyde de chlore et de la délignification au moins partielle de la pâte cellulosique écrue. De préférence, le pH du milieu réactionnel est compris entre 9 et 10,5, et plus préférentiellement sensiblement égal à 10, lors de l'oxydation catalytique des fibres de cellulose. Ces valeurs de pH permettent en outre d'éviter de détériorer les fibres de cellulose.

Lorsque le dioxyde de chlore est fourni, et plus particulièrement lors de l'activation du radical nitroxyle hétérocyclique par le dioxyde de chlore et de la délignification au moins partielle de la pâte cellulosique écrue, la température du milieu réactionnel est de préférence comprise entre 20°C et 50°C, et encore plus préférentiellement entre 25°C et 40°C. Lors de l'oxydation catalytique des fibres de cellulose, la température du milieu réactionnel est de préférence comprise entre 20°C et 50°C, et encore plus préférentiellement entre 25°C et 40°C. Il est généralement connu que plus la température est élevée, plus la cinétique d'une réaction peut être accélérée. De préférence, la température du milieu réactionnel est sensiblement égale à la limite supérieure des gammes de température indiquées. Ces gammes de températures permettent en outre d'éviter une dégradation des fibres de cellulose en milieu alcalin, pouvant se produire à des températures supérieures à 50 °C, voire supérieures à 40 °C.

Le procédé peut en outre comprendre une étape d'acidification du milieu réactionnel à la suite de l'oxydation catalytique des fibres de cellulose et avant l'étape de récupération des fibres de cellulose oxydées. L'étape d'acidification est alors de préférence exempte d'une étape préalable de lavage du milieu réactionnel. Ainsi, l'étape d'acidification permet d'utiliser une réserve oxydante, formée par les ions chlorites produits lors de la réaction du dioxyde de chlore avec la lignine, ainsi qu'avec le radical nitroxyle hétérocyclique. Cette réserve oxydante permet de compléter l'oxydation des fibres cellulosiques, en convertissant les groupements carbonyles résiduels en groupements carboxyles, et tout en pouvant compléter la délignification de la pâte cellulosique écrue. Grâce à la réserve oxydante, l'étape d'acidification peut être exempte d'une étape d'ajout d'un oxydant additionnel.

De préférence, l'étape d'acidification peut être exempte d'ajout d'un réactif oxydant dans le réacteur. Dès lors, non seulement le procédé allie la délignification d'une pâte cellulosique écrue et l'oxydation catalytique des fibres de cellulose, mais en outre il permet de limiter la quantité de réactifs oxydants et donc de limiter l'impact du procédé sur l'environnement.

Lors de l'étape d'acidification, le pH du milieu réactionnel peut être compris entre 3 et 5. Cette gamme de valeurs de pH permet de favoriser la dismutation des ions chlorite en dioxyde de chlore, et ainsi favoriser l'oxydation des fibres cellulosiques ainsi qu'une délignification complémentaire, tout en limitant le risque de dégradation des fibres de cellulose. De préférence, lors de l'étape d'acidification, le pH du milieu réactionnel peut être sensiblement égal à 4.

Lors de l'étape d'acidification, la température du milieu réactionnel peut être sensiblement comprise entre 50 et 80°C. De préférence, la température est sensiblement égale à 70 °C. Plus la température est élevée, plus la cinétique de réaction peut être accélérée. Cette gamme de température permet en outre d'éviter une dégradation des fibres de cellulose en milieu acide, pouvant se produire pour des températures supérieures à 80 °C.

Le procédé peut en outre comprendre, suite à l'étape de récupération des fibres de cellulose oxydées, une étape de récupération d'au moins un effluent destiné à être réintroduit dans un procédé de blanchiment de pâte papetière. Ainsi, le volume d'effluent à traiter est limité, et le coût du procédé dans lequel l'effluent est introduit peut être réduit.

Un autre aspect concerne un procédé de production de cellulose microfibrillée, le procédé comprenant :

- un procédé d'oxydation catalytique d'une pâte cellulosique écrue tel qu'introduit ci-dessus ; puis
- une étape de microfibrillation, de préférence une microfibrillation mécanique, des fibres de cellulose oxydées pour obtenir une suspension comprenant de la cellulose microfibrillée.

Le procédé de production de cellulose microfibrillée présente les avantages du procédé d'oxydation catalytique tel qu'introduit ci-dessus. Il permet par conséquent de produire de la cellulose microfibrillée à partir d'une pâte cellulosique écrue. Le procédé de production de cellulose microfibrillée présente en outre un coût et un impact environnemental réduits, offrant la perspective d'une production de cellulose microfibrillée facilitée à l'échelle industrielle.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par une partie des dessins d'accompagnement suivants.

La figure 1 représente les réactions chimiques mises en jeu dans un procédé d'oxydation catalytique de l'art antérieur.
La figure 2 représente les réactions chimiques mises en jeu selon un mode de réalisation du procédé d'oxydation catalytique selon l'invention.
La figure 3 représente une vue schématique d'un exemple de montage expérimental permettant la mise en oeuvre du procédé d'oxydation catalytique selon l'invention.
La figure 4 représente les étapes du procédé d'oxydation catalytique selon un mode de réalisation de l'invention.
La figure 5 est un graphique illustrant le nombre de fibres de cellulose, d'une longueur supérieure à 80 micromètres ($\mu$m), par gramme de pâte cellulosique sèche, obtenu à l'issue du procédé d'oxydation catalytique selon un mode de réalisation de l'invention, et à l'issue du procédé de production de cellulose microfibrillée selon plusieurs modes de réalisation de l'invention.
La figure 6 est un graphique illustrant l'énergie mécanique, en MW.h par tonne de pâte cellulosique sèche, consommée lors de la mise en oeuvre du procédé d'oxydation catalytique selon un mode de réalisation de l'invention, et lors du procédé de production de cellulose microfibrillée selon plusieurs modes de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE

Il est précisé que, dans le cadre de la présente invention, la pâte cellulosique écrue est une pâte comprenant des fibres lignocellulosiques, c'est à dire que les fibres cellulosiques comprennent de la cellulose et de la lignine. La pâte cellulosique écrue peut de façon alternative être décrite comme non blanchie. La pâte cellulosique écrue peut être issue de toute biomasse contenant des fibres lignocellulosiques. Plus particulièrement, la pâte de cellulose peut être obtenue à partir de bois. Une « pâte cellulosique écrue » selon la présente invention peut donc en alternative être nommée « pâte lignocellulosique ».

Une pâte cellulosique écrue peut être caractérisée par un taux de lignine. Ce taux de lignine peut usuellement être caractérisé par un indice kappa, ou tout indice équivalent, tel que l'indice obtenu par la méthode Klason.

L'indice kappa $I_k$ est un indice proportionnel au taux de lignine dans la pâte cellulosique écrue. Typiquement, le taux de lignine L est donné par la relation suivante :

$$L = k \times I_k$$

k correspondant au coefficient kappa. Le coefficient kappa peut par exemple être égal à 0,155 pour les pâtes de résineux et à 0,165 pour les pâtes de feuillus.

L'indice kappa peut être mesuré en tant qu'indice d'oxydabilité au permanganate de potassium de la pâte lignocellulosique, par exemple selon la norme ISO 302:2015.

La méthode Klason analyse pondéralement la lignine après élimination des polysaccharides par hydrolyse en milieu acide. Notons que cette méthode est moins utilisée car plus fastidieuse et longue à réaliser. Par ailleurs, elle ne permet pas de mesurer des faibles teneurs en lignine, à cause d'imprécisions trop importantes sur la dissolution et la pesée.

La cellulose est un polymère comprenant des chaînes de glucopyranose. Ces chaînes de glucopyranose peuvent être liées de manière linéaire, et plus particulièrement par liaison β-1,4. La cellulose s'agence naturellement en microfibrilles, aussi appelée cellulose microfibrillée. Les microfibrilles sont associées en fibres de cellulose.

Il est connu de former de la cellulose microfibrillée à partir des fibres de cellulose. Lorsque les microfibrilles présentent des diamètres inférieurs à 1 μm, la cellulose microfibrillée est connue sous l'acronyme MFC, de l'anglais MicroFibrillated Cellulose, ou sous l'acronyme NFC, ou cellulose nanofibrillée, ou nanocellulose, de l'anglais NanoFibrillated Cellulose. Les microfibrilles contenues dans la cellulose microfibrillée ont typiquement une longueur comprise entre 0,5 et 2 μm et un diamètre compris entre 5 et 70 nm. On note que, dans la suite de la description, les termes "cellulose microfibrillée" ou « microfibrilles » sont utilisés indifféremment pour de la cellulose nanofibrillée (NFC) ou microfibrillée (MFC). L'étape de formation de la cellulose microfibrillée à partir des fibres de cellulose est désignée par le terme « microfibrillation », cette microfibrillation pouvant notamment être effectuée par broyage mécanique.

Le radical nitroxyle hétérocyclique désigne un composé radicalaire propre à oxyder sélectivement des groupes hydroxyles présents en C-6 des unités de glucopyranose de la cellulose. Selon un exemple, le radical nitroxyle hétérocyclique est le radical (2,2,6,6-tétraméthylpipéridin-1-yl)oxy, ci-après désigné TEMPO. D'autres composés nitroxyles hétérocycliques, connus pour leur sélectivité dans l'oxydation des groupes hydroxyles présents en C-6 des unités de glucopyranose de la cellulose, peuvent également être utilisés. Ces composés sont cités dans la littérature.

Dans la description suivante, le procédé d'oxydation catalytique est décrit selon un mode de réalisation particulier, dans lequel TEMPO est utilisé. Il est entendu que les opérations décrites, dans lesquelles TEMPO est impliqué, s'appliquent de manière analogue à tout dérivé de TEMPO ou à tout radical nitroxyle hétérocyclique capable de catalyser sélectivement l'oxydation des groupes hydroxyles présents en C-6 dans la cellulose. La forme radicalaire non activée du TEMPO est désigné TEMPO dans la suite. Sa forme activée et oxydée est désignée TEMPO-ox dans la suite. Sa forme activée et réduite est désignée TEMPO-red dans la suite.

On entend par « hypochlorite », un composé chimique comprenant l'anion hypochlorite, de formule ClO⁻.

La quantité molaire de matière d'un réactif correspond à une grandeur de comptage du réactif, donnée en mole.

Par « réactif oxydant », on entend un réactif propre à oxyder un composé chimique. Plus particulièrement, dans le cadre de la présente invention, un réactif oxydant désigne un réactif propre à oxyder les polysaccharides dont la cellulose et/ou la lignine, tels que le dioxyde de chlore, TEMPO-ox et l'hypochlorite.

Par définition, lorsque qu'une réaction chimique a atteint son équilibre, la variation de la quantité molaire de matière de chacun des réactifs de la réaction chimique est sensiblement nulle. La variation temporelle de la quantité molaire de matière de chacun des réactifs de la réaction chimique peut être sensiblement nulle. Une réaction chimique peut en outre atteindre son équilibre lorsque la quantité molaire de matière d'au moins un des réactifs est sensiblement nulle, c'est-à-dire que ledit au moins un des réactifs a été consommé.

L'oxydation des fibres cellulosiques désigne l'oxydation des groupes hydroxyles de la cellulose, et plus particulièrement des groupes hydroxyles présents en C-6, en carbonyles, aussi appelés fonctions aldéhydes, voire en groupes carboxyles. Lorsqu'un groupe hydroxyle est oxydé en groupe carboxyle, on considère que l'oxydation de ce groupe hydroxyle est complète. Dans la description suivante, l'oxydation catalytique fait référence à l'oxydation des groupes hydroxyle par médiation nitroxyle (telle que "TEMPO").

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

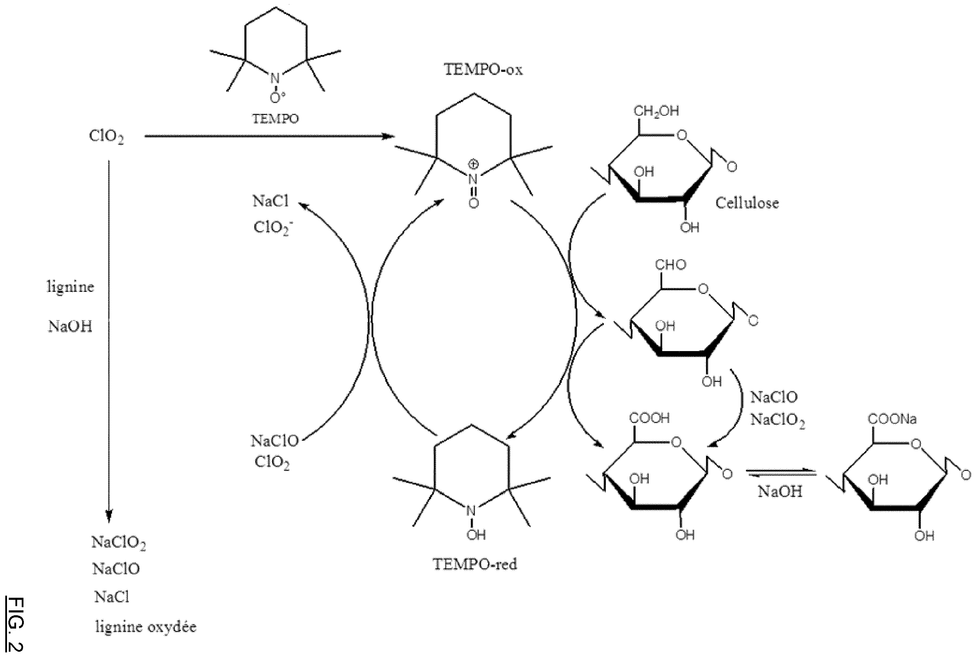

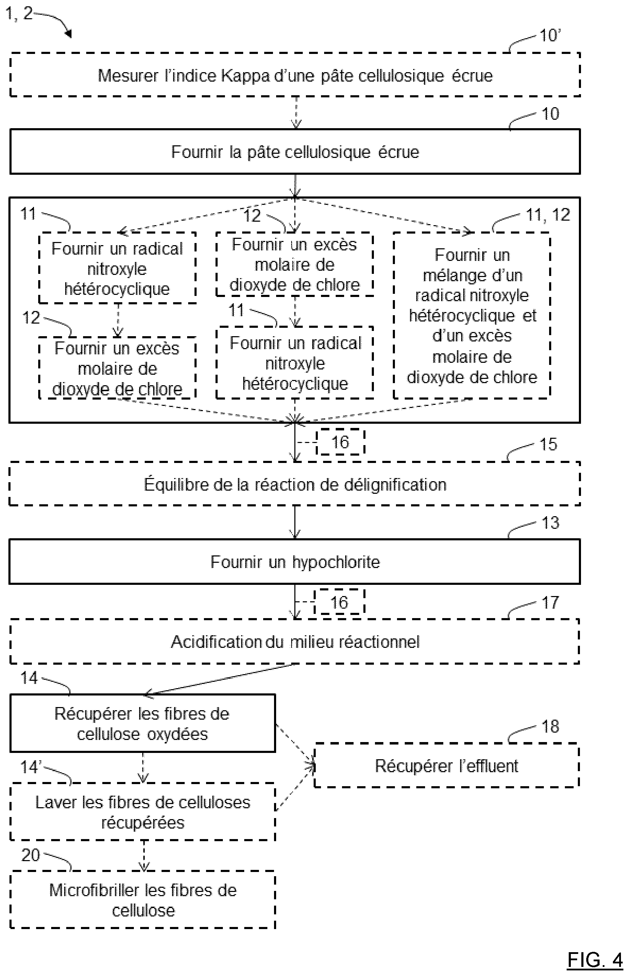

Le procédé d'oxydation catalytique d'une pâte cellulosique, selon un mode de réalisation exemplatif de l'invention va maintenant être décrit, en référence aux figures 2 à 4. À titre d'exemple, le procédé est illustré par la figure 4, où des variantes du procédé sont indiquées par des chemins en parallèle et des étapes optionnelles sont indiquées par des cadres et des flèches en pointillé.

Le procédé 1 comprend une étape dans laquelle une pâte cellulosique écrue est fournie 10 dans un réacteur 30.

La pâte cellulosique écrue peut être fournie en mélange avec de l'eau afin d'obtenir une concentration en matière sèche de pâte cellulosique écrue comprise entre 2 et 6 %. De préférence, la concentration en matière sèche de pâte cellulosique écrue est comprise entre 3% et 6 %, et plus préférentiellement sensiblement égale 4 %, en masse de pâte cellulosique écrue sèche.

La pâte cellulosique écrue peut être issue de toute biomasse contenant des fibres cellulosiques. Plus particulièrement, la pâte cellulosique écrue peut être obtenue à partir de bois. Par exemple, la pâte cellulosique écrue peut être issue de résineux. Selon un autre exemple, la pâte cellulosique écrue peut être issue de feuillus. Cette pâte cellulosique écrue peut être obtenue par traitement du matériau végétal fibreux, par exemple par un procédé Kraft, un procédé de cuisson au bisulfite, un procédé de cuisson soude, un procédé de préhydrolyse Kraft.

Le procédé 1 peut comprendre en outre une étape de mesure 10' de l'indice kappa de la pâte cellulosique écrue, afin d'évaluer le taux de lignine dans la pâte cellulosique écrue. De façon alternative, l'indice kappa peut être renseigné par le fournisseur de la pâte cellulosique écrue. De préférence, l'indice kappa des pâtes cellulosiques écrues mises en oeuvre dans ce procédé est compris entre 6 et 60, de préférence entre 20 et 35. Par exemple, pour une pâte de feuillus après un procédé de cuisson Kraft, l'indice kappa est d'environ 18 à 22. Selon un deuxième exemple, pour une pâte de feuillus après un procédé de cuisson Kraft et une prédélignification à l'oxygène, l'indice kappa est d'environ 9. Selon un troisième exemple, pour une pâte de résineux après une procédé de cuisson Kraft, l'indice kappa est d'environ 26. Selon un quatrième exemple, pour une pâte de résineux après un procédé de cuisson Kraft et une prédélignification à l'oxygène, l'indice kappa est d'environ 12.

Le procédé 1 comprend une étape dans laquelle TEMPO est fourni 11 dans le réacteur. Du dioxyde de chlore, de formule chimique $ClO_2$, est en outre fourni 12 dans le réacteur. $ClO_2$ permet d'oxyder la lignine de la pâte cellulosique écrue, ce qui induit la délignification au moins partielle de la pâte cellulosique écrue, comme illustré en figure 2. Dès lors, on comprend que l'ajout de $ClO_2$ dans le réacteur permet de former un milieu réactionnel avec la pâte cellulosique écrue.

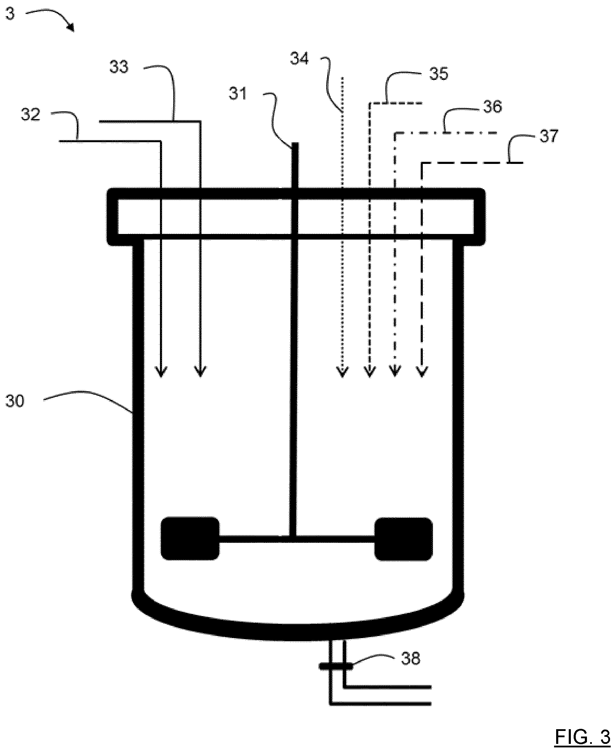

$ClO_2$ peut en outre oxyder TEMPO pour former l'espèce activée TEMPO-ox, comme illustré en figure 2. L'ajout de TEMPO et l'ajout de $ClO_2$ dans le réacteur peuvent être successifs ou simultanés. De préférence, TEMPO est mélangé au $ClO_2$ avant leur ajout dans le réacteur 30. L'oxydation de la lignine par le $ClO_2$ étant très rapide, fournir au réacteur un mélange de TEMPO et de $ClO_2$ favorise une oxydation quantitative du TEMPO en TEMPO-ox par le $ClO_2$, avant que le $ClO_2$ ne réagisse avec la lignine. Par exemple, et comme illustré en figure 3, le mélange de $ClO_2$ et de TEMPO-ox peut être fourni 12 au réacteur 30 par la ligne d'ajout 34. En outre, au moins lors de la délignification de la pâte cellulosique écrue par le $ClO_2$, le milieu réactionnel peut être mélangé. Pour cela, un dispositif d'agitation 31 peut être immergé dans le milieu réactionnel et actionné de façon à mélanger le milieu réactionnel. Par exemple, le dispositif d'agitation 31 peut comprendre une hélice.

Pour favoriser une oxydation quantitative du TEMPO ainsi que la délignification au moins partielle de la pâte cellulosique écrue, le $ClO_2$ est fourni 12 au réacteur, en excès molaire par rapport à la quantité molaire de matière n2 de TEMPO fournie 11 au réacteur. De préférence, la quantité molaire de matière n1 de $ClO_2$ est sensiblement supérieure ou égale à la somme de la quantité molaire de matière n2 de TEMPO, et d'une quantité molaire de matière proportionnelle à l'indice kappa de la pâte cellulosique écrue, par exemple mesuré 10' lors de la mise en oeuvre du procédé 1. Cette quantité molaire de matière proportionnelle à l'indice kappa de la pâte cellulosique écrue, peut être désignée comme la charge délignifiante de $ClO_2$.

Pour permettre l'activation de **TEMPO** par $ClO_2$, le pH du milieu réactionnel est basique, et donc supérieur à 7. Afin d'optimiser l'activation de **TEMPO** par le $ClO_2$ et la délignification au moins partielle de la pâte cellulosique écrue par le $ClO_2$, le pH peut être compris entre 8 et 11. De préférence, le pH est régulé 16 à une valeur comprise entre 8 et 11. Pour cela, comme illustré en figure 3, une sonde de pH 32 peut être disposée sur le réacteur 30, de façon à mesurer le pH du milieu réactionnel. Afin de réguler 16 le pH, le pH du milieu réactionnel peut être augmenté par l'ajout d'une solution basique, telle qu'une solution d'hydroxyde de sodium, de formule NaOH, par exemple à une concentration de 2 mol/L. Au besoin, le pH du milieu réactionnel peut être diminué par l'ajout d'une solution acide, telle qu'une solution d'acide sulfurique, de formule $H_2SO_4$, par exemple à une concentration de 1 mol/L. La solution basique peut être ajoutée au milieu réactionnel par la ligne d'ajout 37. La solution acide peut être ajoutée au milieu réactionnel par la ligne d'ajout 36.

Afin d'optimiser l'activation de TEMPO par le $ClO_2$ et la délignification au moins partielle de la pâte cellulosique écrue par le $ClO_2$, le pH peut être compris entre 9 et 10,5. De préférence le pH est régulé dans cette gamme, comme indiqué 16 en figure 4. En effet, à partir d'un pH de 11, des radicaux hydroxyles HO·peuvent être générés et détériorer les fibres de cellulose.

Lorsque $ClO_2$ est fourni, et plus particulièrement lors de l'activation TEMPO par $ClO_2$ et de la délignification au moins partielle de la pâte cellulosique écrue, la température du milieu réactionnel peut être comprise entre 20°C et 50°C, de préférence entre 25°C et 40°C. Pour cela, le réacteur 30 peut être thermostaté. Dans ces gammes de température et de pH, sans impliquer une relation théorique particulière, plus la température sera haute, moins il sera nécessaire d'augmenter le pH pour favoriser l'activation de TEMPO et la délignification par $ClO_2$.

De préférence, la quantité molaire de matière n1 de $ClO_2$ fourni 12 peut être sensiblement supérieure ou égale à, en mmol/g de pâte cellulosique écrue sèche :

$$n_2 + \left( \frac{Ex \times F \times A}{B \times M_{ClO2}} \times I_k \right)$$

$I_k$ correspondant à l'indice kappa de la pâte cellulosique écrue, Ex correspondant à un facteur d'excès compris entre 1 et 3,5, F correspondant au facteur chlore, F étant compris entre 0,1 et 0,5, de préférence entre 0,2 et 0,4, A étant un facteur de conversion d'unité égal à 10, B étant une constante égale à 2,63 et traduisant le poids de $Cl_2$ (2,63 g), ayant le même pouvoir oxydant que 1 g de $ClO_2$, et $M_{ClO2}$ correspondant à la masse molaire du dioxyde de chlore $ClO_2$, en g/mole, et plus particulièrement $M_{ClO2}$.

La quantité molaire de matière n2 de $ClO_2$ est ainsi au moins supérieure ou égale à la quantité n1 de TEMPO, afin d'activer TEMPO en TEMPO-ox. Par exemple, la quantité molaire de matière n2 de TEMPO fourni 11 est sensiblement égale à 0,05 mmol/g de pâte cellulosique écrue sèche.

Notons qu'en alternative, la formule énoncée plus haut peut être adaptée pour calculer la quantité de $ClO_2$ en fonction du taux de lignine de la pâte cellulosique écrue, ou de tout autre indice caractéristique de ce taux de lignine, plutôt qu'en fonction de son indice kappa.

Afin de calculer la charge délignifiante de $ClO_2$, on peut prendre en compte le facteur chlore permettant de pondérer l'indice kappa de la pâte cellulosique écrue pour calculer la charge délignifiante associée. De préférence, le facteur chlore est alors sensiblement égal à 0,3.

En outre, on peut tenir compte du pH non acide auquel s'effectue la réaction de délignification. En effet, le dioxyde de chlore est un agent de blanchiment couramment utilisé en milieu acide dans l'industrie papetière lors des stades de blanchiment après cuisson, par réaction avec la lignine. Dans ces stades de blanchiment, le pH du milieu réactionnel est acide. Lors de la réaction entre le $ClO_2$ et la lignine en milieu acide, des ions chlorures, de formule $Cl^-$, sont produits. En milieu basique, des ions chlorites, de formule $ClO_2^-$, sont produits. Le transfert d'électrons lié au couple $ClO_2/ClO_2^-$ est inférieur à celui du couple $ClO_2/Cl^-$ ce qui réduit le pouvoir oxydant disponible. La réaction du $ClO_2$ avec la lignine en milieu basique est donc moins efficace.

Afin de favoriser la délignification de la pâte cellulosique écrue en milieu basique, un supplément de $ClO_2$ est ajouté par l'introduction du coefficient d'excès (Ex). De préférence, le coefficient d'excès (Ex) est compris entre 2 et 3,5. L'utilisation d'un excès peut notamment tenir compte de la réaction limitée, en termes de transfert d'électrons, du $ClO_2$ en milieu basique, contrairement aux conditions usuelles d'emploi du $ClO_2$ en milieu acide. Par exemple, la réaction du $ClO_2$ en milieu basique peut générer jusqu'à 80-90% de chlorite (taux de conversion molaire, noté $t_{chlorite}$). L'efficacité redox de l'oxydation (E, nombre d'électrons transférés/nombre d'électrons transférables dans la réaction d'oxydation), dans ces conditions, peut donc être limitée à 0,3 environ. En effet, l'efficacité E de l'oxydation de la lignine par $ClO_2$ peut être exprimée par : $E = 1 - 0,8 \times t_{chlorite}$ ; typiquement, pour $t_{chlorite} = 0,85$, $E = 1 - 0,8 \times 0,85 = 0,32$ ; soit un facteur d'excès $Ex = 1/E = 3,1$. Ce supplément de $ClO_2$ permet donc de blanchir la pâte cellulosique. En outre, une plus grande quantité d'ions chlorites est produite, dont le rôle lors de l'étape d'acidification 17 sera décrit dans la suite. En outre, ces ions chlorites ne sont pas réactifs en milieu basique et ne perturbent donc pas les autres réactions chimiques ayant lieu dans le milieu réactionnel.

De préférence, la quantité molaire de matière n1 de $ClO_2$ fourni 12 peut être sensiblement égale à la formule donnée précédemment. En effet, lorsque le $ClO_2$ est fourni 12 en trop grand excès, le $ClO_2$ n'ayant pas réagi avec TEMPO et avec la lignine peut se dismuter en milieu basique, selon la réaction chimique suivante :

$$2\ ClO_2 + 2\ OH^- \rightarrow ClO_2^- + ClO_3^- + H_2O$$

Des ions chlorates $ClO_3^-$ sont alors produits dans le milieu réactionnel.

Le procédé 1 comprend en outre une étape dans laquelle de l'hypochlorite est fourni 13 au milieu réactionnel. Par exemple, l'hypochlorite est un hypochlorite de sodium, de formule NaClO. Dans la suite, on se réfère au mode de réalisation particulier où NaClO est fourni 13 au milieu réactionnel.

Avant de fournir 13 le NaClO au milieu réactionnel, on attend de préférence que la réaction de délignification de la pâte écrue par le $ClO_2$ ait atteint son équilibre 15. Ainsi, le procédé 1 permet d'éviter de consommer le dioxyde de chlore par une réaction secondaire avec l'hypochlorite, lorsque la délignification de la pâte cellulosique est en cours. En effet, il a été mis en évidence lors du développement du procédé 1, que le dioxyde de chlore réagit avec l'hypochlorite en milieu alcalin, pour former des ions chlorates. En outre, les ions chlorates sont de puissants oxydants, instables et dangereux pour l'environnement. On comprend alors que fournir 13 NaClO au milieu réactionnel, après que la réaction de délignification de la pâte écrue par le $ClO_2$ ait atteint son équilibre 15, permet de favoriser la réaction de délignification, tout en limitant l'impact environnemental du procédé.

Pour cela, la quantité molaire de matière de $ClO_2$ présente dans le milieu réactionnel peut être mesurée au cours du temps, par exemple afin de déterminer le temps à partir duquel la réaction de délignification a atteint son équilibre. De façon alternative ou complémentaire, le $ClO_2$ réagissant avec la lignine, la quantité molaire de matière de lignine présente dans le milieu réactionnel peut être mesurée au cours du temps. Pour cela, la réaction de délignification correspondant à une réaction de blanchiment de la pâte cellulosique écrue, une mesure de blancheur de la pâte cellulosique peut être effectuée, par exemple selon la norme ISO 2470-1:2016, dans laquelle le facteur de réflectance d'une feuille de papier, réalisée à partir de la pâte à analyser, est mesuré par spectrophotométrie à 457 nm. La quantité de matière de la lignine peut, en alternative ou en complément, être suivie par le paramètre $K_{457}$ qui correspond au coefficient d'absorption de la lumière de Kubelka-Munk par les groupements chromophores de la lignine.

Notons qu'en alternative ou en complément au suivi de la quantité molaire de matière de $ClO_2$, on peut prévoir de mesurer au cours du temps la quantité molaire d'espèces réactionnelles formées lors de la réaction de délignification de la pâte écrue par le $ClO_2$, et notamment ions chlorite $ClO_2^-$, chlorure $Cl^-$, chlorate $ClO_3^-$.

Le suivi de la réaction de délignification peut en outre avoir été effectué lors d'une étape préalable de calibration du procédé, afin de définir un délai suffisant pour que la réaction de délignification ait atteint son équilibre. Dans le procédé 1, l'ajout de $ClO_2$ et l'ajout de NaClO peuvent être séparés temporellement par ce délai suffisant déterminé.

En effet, lors du développement du procédé 1, il a été montré que $ClO_2$ réagit avec NaClO en milieu basique. Cette réaction comprend d'abord une première étape de dismutation du $ClO_2$ selon la réaction chimique donnée précédemment.

Les ions $ClO_2^-$ formés réagissent alors avec les ions $ClO^-$ selon la réaction chimique suivante :

$$ClO^- + ClO_2^- \rightarrow ClO_3^- + Cl^-$$

Le dioxyde de chlore $ClO_2$ est donc consommé en partie par l'hypochlorite de sodium NaClO. Cette partie n'est donc pas consommée pour réagir avec la lignine. En outre, des ions chlorates $ClO_3^-$ sont produits dans le milieu réactionnel.

Par conséquent, l'ajout de $ClO_2$ et l'ajout de NaClO peuvent être séparés temporellement. La réaction du dioxyde de chlore avec la lignine en milieu alcalin étant rapide même à température ambiante, un délai de 20 minutes peut être suffisant pour que la réaction de délignification ait atteint son équilibre. NaClO peut dès lors être ajouté 13. Notons que, de préférence, aucun lavage de la pâte n'est réalisé avant que NaClO soit fourni 13 au milieu réactionnel.

Après que la réaction de délignification de la pâte cellulosique écrue par le $ClO_2$ ait atteint son équilibre, NaClO peut donc être fourni 13 au milieu réactionnel, par exemple par la ligne d'ajout 35, comme illustré en figure 3.

Comme illustré en figure 2, TEMPO-ox peut oxyder des groupements hydroxyles présents en C-6 de la cellulose, en groupements carbonyles, voire en groupements carboxyles. Le catalyseur TEMPO-ox est alors réduit en TEMPO-red. Une fois NaClO fourni 13 au milieu réactionnel, NaClO peut être consommé pour régénérer le catalyseur sous sa forme TEMPO-ox. Le catalyseur TEMPO-ox peut alors à nouveau réagir avec les fibres de cellulose pour les oxyder catalytiquement. En outre, NaClO peut réagir avec des groupements carbonyles présents en C-6 afin de compléter leur oxydation en groupements carboxyles.

Lors de l'oxydation catalytique des fibres de cellulose, le pH du milieu réactionnel peut être compris entre 8 et 11. De préférence, le pH du milieu réactionnel est régulé dans cette gamme, par exemple par ajout d'un acide et/ou d'une base, comme indiqué 16 en figure 4. On peut prévoir d'utiliser en alternative ou de façon complémentaire une solution tamponnée. Par exemple, le pH du milieu réactionnel est sensiblement égal à 10. **En** outre, la température du milieu réactionnel peut être comprise entre 20°C et 50°C, de préférence entre 25°C et 40°C. Dans ces gammes de température et de pH, sans impliquer une relation théorique particulière, plus la température sera haute, moins il sera nécessaire d'augmenter le pH pour favoriser l'oxydation catalytique des fibres de cellulose.

Toutefois, des groupements carbonyles peuvent subsister à l'issue de l'oxydation catalytique des fibres de cellulose. Afin de compléter l'oxydation des groupements hydroxyles présents en C-6 en groupements carboxyles, le procédé 1 peut en outre comprendre une étape d'acidification 17 du milieu réactionnel. Cette étape d'acidification 17 est de préférence effectuée à la suite de l'oxydation catalytique des fibres de cellulose et avant une étape de récupération 14 des fibres de cellulose oxydées, et ce de préférence sans lavage préalable du milieu réactionnel.

Cette étape d'acidification 17 permet de compléter l'oxydation des fibres cellulosiques, en convertissant les groupements carbonyles résiduels en groupements carboxyles, tout en permettant le cas échéant de compléter la délignification de la pâte cellulosique écrue. En effet, lors de la réaction de délignification par $ClO_2$ en excès, ainsi que lors de la réaction d'activation du TEMPO par $ClO_2$, des ions chlorites $ClO_2^-$ sont produits, ces ions n'étant pas réactifs dans le milieu réactionnel alcalin. En milieu acide, ces ions $ClO_2^-$ jouent avantageusement le rôle de réserve oxydante. En effet, l'étape d'acidification 17 permet de régénérer $ClO_2$ par dismutation des ions $ClO_2^-$ selon la réaction chimique suivante :

$$3\ ClO_2^- + H_2O \rightarrow 2\ ClO_2 + ClO_3^- + 2H^+$$

Le $ClO_2$ étant régénéré, il peut compléter l'oxydation des fibres de cellulose, voire réagir avec la lignine résiduelle dans le milieu réactionnel pour compléter la délignification de la pâte cellulosique écrue. Ainsi, l'étape d'acidification 17 peut être exempte de l'ajout d'un réactif oxydant supplémentaire dans le réacteur.

De préférence, l'étape d'acidification 17 est effectuée lorsque la réaction initiale du dioxyde de chlore avec la lignine a atteint son équilibre, et de préférence lorsque l'oxydation catalytique des fibres de cellulose a atteint son équilibre. Lors de l'étape d'acidification 17, le pH du milieu réactionnel peut être compris entre 3 et 5. De préférence, le pH du milieu réactionnel est sensiblement égal à 4. De préférence, le pH du milieu réactionnel est régulé à une valeur sensiblement comprise entre 3 et 5, voire à une valeur de 4. Pour cela, le pH du milieu réactionnel peut être diminué par l'ajout d'une solution acide, telle qu'une solution d'acide sulfurique, de formule $H_2SO_4$, par exemple à une concentration de 1 mol/L. Au besoin, le pH du milieu réactionnel peut être augmenté par l'ajout d'une solution basique, telle qu'une solution d'hydroxyde de sodium, de formule NaOH, par exemple à une concentration de 2 mol/L. La solution acide peut être ajoutée au milieu réactionnel par la ligne d'ajout 36. La solution basique peut être ajoutée au milieu réactionnel par la ligne d'ajout 37.

Lors de l'étape d'acidification 17, la température du milieu réactionnel peut être comprise entre 50 et 80°C. Dans ces gammes de température et de pH, sans impliquer une relation théorique particulière, plus la température sera haute, moins il sera nécessaire d'abaisser le pH pour compléter l'acidification 17 des fibres de cellulose, et inversement.

À l'issue de l'oxydation catalytique des fibres de cellulose, voire à l'issue de l'étape d'acidification 17, une étape de récupération 14 des fibres de cellulose oxydées peut être effectuée. Par exemple, les fibres de cellulose oxydées peuvent être retirées du réacteur 30 par une vanne 38, par exemple située en bas du réacteur 30. Le réacteur 30 peut en outre être rincé à l'eau afin de récupérer un maximum de fibres de cellulose oxydées, sous la forme d'une suspension fibreuse. La suspension fibreuse peut être filtrée, puis lavée 14' abondamment jusqu'à élimination complète des réactifs. Par exemple, la suspension peut être filtrée sur un creuset filtrant d'indice de porosité n°2.

L'effluent issu de la filtration de la suspension fibreuse et/ou du lavage 14' peut en outre être récupéré 18, notamment pour pouvoir être réintroduit dans un procédé de blanchiment de pâte papetière. En effet, cet effluent comprend une quantité importante d'ions chlorite $ClO_2^-$, voire de $ClO_2$, pouvant réagir avec la lignine d'une pâte papetière dans les procédés de blanchiment conventionnels réalisés à pH acide.

Suite à la récupération 14 des fibres de cellulose oxydées, ces fibres peuvent être utilisées pour fabriquer d'autres matériaux. Notamment, ces fibres de cellulose oxydées peuvent être mises en œuvre dans un procédé 2 de production de cellulose microfibrillée. Ces fibres peuvent ainsi être traitées lors d'une étape de microfibrillation 20, et plus particulièrement par broyage mécanique pour obtenir une suspension comprenant de la cellulose microfibrillée. Le procédé peut en outre comprendre une étape de mélange des fibres préalablement à la microfibrillation.

Dans la suite, des exemples du procédé 1 d'oxydation catalytique et du procédé 2 de production de cellulose microfibrillée sont détaillés.

Selon un premier exemple, les essais ont été réalisés dans un réacteur 30 à double-enveloppe en verre, d'une capacité de 1L. Une agitation *in situ* est assurée par une hélice 31 à pâles minces, comprenant quatre pâles plates inclinées à 45° en Téflon, de diamètre 6 cm, pouvant être positionnée à une hauteur réglable dans le réacteur 30. Un moteur électrique assure la rotation de l'hélice. La double enveloppe du réacteur 30 est thermo-régulée. Le couvercle du réacteur 30, en Téflon, permet l'installation de deux ampoules de coulée 34, 35 pour introduire $ClO_2$ et NaClO. Une électrode de pH 32 équipée d'une sonde de température 33, reliée à un pH-mètre, est également installée. Deux burettes à piston 36, 37 peuvent en outre délivrer dans le milieu réactionnel la solution acide et la solution basique pour le contrôle du pH.

Le procédé d'oxydation catalytique exempt d'une étape d'acidification, ci-après désigné DHt, et le procédé d'oxydation catalytique comprenant une étape d'acidification, ci-après désigné DHAt, ont été mis en œuvre respectivement sur 16,6 et 40,0 g de pâte cellulosique écrue sèche de pin radiata, issue d'un procédé Kraft. Avant la mise en œuvre des procédés DHt et DHAt, la pâte cellulosique écrue est remise en suspension dans l'eau puis filtrée sur un entonnoir filtrant de porosité numéro 2 afin d'individualiser les fibres lignocellulosiques. Son indice kappa est de 24,2. Les pourcentages massiques de réactifs utilisés pour les traitements DHt et DHAt sont présentées dans le tableau 1, ci-après. Ces pourcentages massiques sont donnés par rapport au poids de pâte cellulosique sèche. Les quantités de réactifs utilisés pour les traitements DHt et DHAt, en mmol/g de pâte cellulosique écrue sèche, sont données dans le tableau 2, ci-après. Les températures T, les pH et les temps de réaction t des différentes étapes des procédés DHt et DHAt sont en outre détaillées dans le tableau 3, ci-après.

Tableau 1 :

| Procédé | NaClO | $ClO_2$ | TEMPO | NaOH | $H_2SO_4$ |
|---------|-------|---------|-------|------|-----------|
| DHt | 22,3 | 6,72 | 0,78 | n.m. | 0 |
| DHAt | 22,3 | 8,9 | 0,78 | 11,2 | 9,6 |

Tableau 2 :

| Procédé | NaClO | ClO$_2$ | TEMPO | NaOH | H$_2$SO$_4$ |
|---------|-------|---------|-------|------|-------------|
| DHt | 3,0 | 1,0 | 0,05 | n.m. | 0 |
| DHAt | 3,0 | 1,3 | 0,05 | 2,8 | 0,98 |

Tableau 3 :

| Étape | Procédé DHt | Procédé DHAt |
|-------|-------------|--------------|
| Fournir TEMPO et ClO$_2$ en mélange 11, 12 | pH = 10T = 35 °C<br>t = 20 minutes | pH = 10<br>T = 35 °C<br>t = 20 minutes |
| Fournir NaClO 13 | pH = 10<br>T = 35 °C<br>t = 180 minutes | pH = 10<br>T= 35 °C<br>t = 180 minutes |
| Acidifier 17 le milieu réactionnel | - | pH = 4<br>T = 70 °C<br>t = 120 minutes |

La caractérisation des pâtes cellulosiques avant la mise en œuvre des procédés DHt et DHAt et la caractérisation des fibres de cellulose obtenues à l'issue des procédés DHt et DHAt, ont été réalisée par plusieurs analyses permettant d'obtenir :

- la teneur en groupements carboxyles, en micro-équivalent de COOH par gramme de pâte sèche (méthode au bleu de méthylène) ;
- la teneur en groupements carbonyles, en micro-équivalent de cuivre Cu par gramme de pâte sèche (méthode de l'indice de cuivre) ;
- le degré de polymérisation moyen viscosimétrique (DPv) de la cellulose ;
- la teneur en lignine (mesure de l'indice kappa).

Les fibres cellulosiques obtenues à l'issue du procédé DHt ont été analysées. Les résultats sont comparés à ceux obtenus pour la pâte écrue afin de vérifier l'efficacité du traitement à la fois en termes de délignification et d'oxydation des fibres de cellulose. Les fibres cellulosiques obtenues à l'issue du procédé DHt ont en outre été soumises à une holocellulose à froid, c'est-à-dire à une oxydation au chlorite de sodium en milieu acide. L'holocellulose permet la délignification complète de la pâte, tout en évitant une dépolymérisation des fibres cellulosiques, et permet une suroxydation des groupements carbonyles (les groupements carbonyles étant principalement des aldéhydes présents en C-6) de la cellulose. Les résultats sont présentés dans le tableau 4.

Tableau 4 :

| Procédé | Pâte écrue | Fibres issues du procédé DHt | Fibres issues du procédé DHt + holocellulose |
|---------|-----------|------------------------------|----------------------------------------------|
| Teneur en carboxyle ($\mu$eq de COOH/g de pâte sèche | 107 | 192 | 347 |
| Teneur en carbonyle ($\mu$eq de Cu/g de pâte sèche | 4 | 86 | 9 |
| DPv | 1249 | 260 | 536 |
| Indice kappa | 24,2 | 1,6 | 1,6 |

À l'issue du procédé DHt, la pâte cellulosique écrue est délignifiée puisque l'indice kappa passe d'une valeur de 24,2 à 1,6. Notons que le traitement DHt peut être suivi d'un traitement optionnel, l'holocellulose, qui conduit à compléter de façon optimale le traitement DHt puisque l'on oxyde davantage les fibres de celluloses en transformant les carbonyles résiduels en carboxyles. Cette transformation se fait naturellement dans le DHAt, puisque le passage en milieu acide permet une action similaire par la réserve d'ions chlorite ayant été produite en milieu alcalin, sans qu'il soit nécessaire de faire un traitement d'holocellulose supplémentaire, c'est-à-dire d'ajouter des chlorites supplémentaires.

L'oxydation de la cellulose a été quantifiée via la mesure des groupements fonctionnels, carbonyles et carboxylés. Pendant l'oxydation de la cellulose, les groupements hydroxyles présents en C-6 sont tout d'abord oxydés en groupements carbonyles, puis si les conditions d'oxydation sont suffisantes, les groupements carbonyles sont ensuite oxydés en groupements carboxyles. À l'issue du procédé DHt, la teneur en groupements carboxyles est presque doublée par rapport à la teneur en groupements carboxyles de la pâte cellulosique écrue, et la teneur en groupements carbonyles est multipliée par 21. L'oxydation des groupements hydroxyles est effective mais incomplète puisque l'on s'arrête principalement à l'oxydation en groupements carbonyles. En effet, en complétant l'oxydation des fibres de cellulose à l'issue du procédé DHt par un traitement d'holocellulose, la teneur en groupements carboxyles augmente fortement lorsque la teneur en groupements carbonyles diminue.

Les résultats montrent également que les fibres de cellulose obtenues à l'issue du procédé DHt présente un DPv extrêmement faible comparé à celui de la pâte cellulosique écrue. Toutefois, après le traitement d'holocellulose, le DPv des fibres de cellulose augmente. Dans le cas de la pâte après DHt, les fibres de cellulose contiennent beaucoup de groupements carbonyles qui rendent les fibres de cellulose sensible à la réaction dite de « peeling ». Pour la mesure du DPv, la cellulose est dissoute dans une solution de cupriéthylènediamine qui, de par sa basicité, va favoriser le « peeling » des fibres de cellulose durant la dissolution. Le DPv de 260 mesuré sur la pâte sortie DHt ne reflète donc pas l'état initial de l'échantillon puisque la cellulose est partiellement dépolymérisée lors de sa mise en solution. Généralement, pour mesurer le DPv d'une pâte cellulosique chargée en groupements carbonyles, on réduit au préalable ces fonctions en hydroxyles avec du borohydrure de sodium ($NaBH_4$). Le borohydrure de sodium étant classé CMR, une procédure alternative a été proposée : au lieu de réduire les aldéhydes, ils ont été oxydés en carboxyles par le traitement d'holocellulose. Ainsi le DPv de la cellulose après le traitement DHt est en principe celui mesuré après le post-traitement d'holocellulose, c'est-à-dire 536. Comme attendu, le traitement DHt conduit donc à une assez forte dépolymérisation de la cellulose.

Les performances du procédé DHAt sont présentées dans le tableau 5 et comparées à celles du procédé DHt. Notons que la charge délignifiante en $ClO_2$ dans le procédé DHAt est supérieure par rapport à celle du procédé DHt. la charge délignifiante en $ClO_2$ dans le procédé DHAt a été déterminée en utilisant un facteur d'excès Ex égal à 3,1.

Tableau 5 :

| Procédé | Pâte écrue | Fibres issues du procédé DHt + holocellulose | Fibres issues du procédé DHAt |
|---|---|---|---|
| Teneur en carboxyle ($\mu$eq de COOH/g de pâte sèche | 107 | 347 | 538 |
| Teneur en carbonyle ($\mu$eq de Cu/g de pâte sèche | 4 | 9 | 4 |
| DPv | 1249 | 536 | 122 |
| Indice kappa | 24,2 | 1,6 | 1,8 |

Le procédé DHAt présente de bonnes performances de délignification puisque l'indice kappa est de 1,8 à l'issue du procédé. Notons que l'excès de $ClO_2$ ajouté par rapport au traitement DHt n'a, dans ce cas-ci, pas amélioré la délignification en comparaison avec le procédé DHt. En revanche, l'ajout de l'étape d'acidification augmente l'oxydation des fibres de cellulose pour obtenir jusqu'à une teneur en carboxyles supérieure à 500 $\mu$eq de COOH/g de pâte sèche. Le procédé DHAt permet donc d'atteindre les standards bas du procédé classique TEMPO/NaClO/NaBr. La teneur en groupements carbonyles est similaire à celle de la pâte cellulosique écrue, ce qui montre que l'oxydation des groupements hydroxyles présents en C-6 de la cellulose ne s'arrête pas au stade de la formation de groupements carbonyles mais atteint le stade de formation de groupements carboxyles. Le dioxyde de chlore et les ions chlorites, en milieu acide, suroxydent les carbonyles créés pendant la première phase du traitement en milieu alcalin. Une chute importante du DPv de la cellulose est observé. Cet effet est dû à une action dépolymérisante du dioxyde de chlore en milieu alcalin, appliqué dans la première phase du traitement.

Le traitement DHAt, permettant d'atteindre une pâte délignifiée et une teneur en carboxyles au niveau des standards des pâtes utilisées pour la production de cellulose microfibrillée, semble donc plus adapté à ce type de production que le stade DHt. Ce dernier peut toutefois représenter une alternative valable, si le taux de carboxylation demandé est moindre. D'autre part, la dépolymérisation de la cellulose peut être adaptée en faisant varier la dose en dioxyde de chlore dans le procédé DHt ou le procédé DHAt.

Nous détaillons dans la suite un exemple de production de cellulose microfibrillée à partir d'un procédé DHAt. 170 g équivalents secs de fibres de cellulose oxydées par le traitement DHAt ont été produits dans les conditions opératoires précédemment. Les fibres de cellulose sont ensuite mises en suspension aqueuse à une concentration en matière sèche de fibres de 2 %.

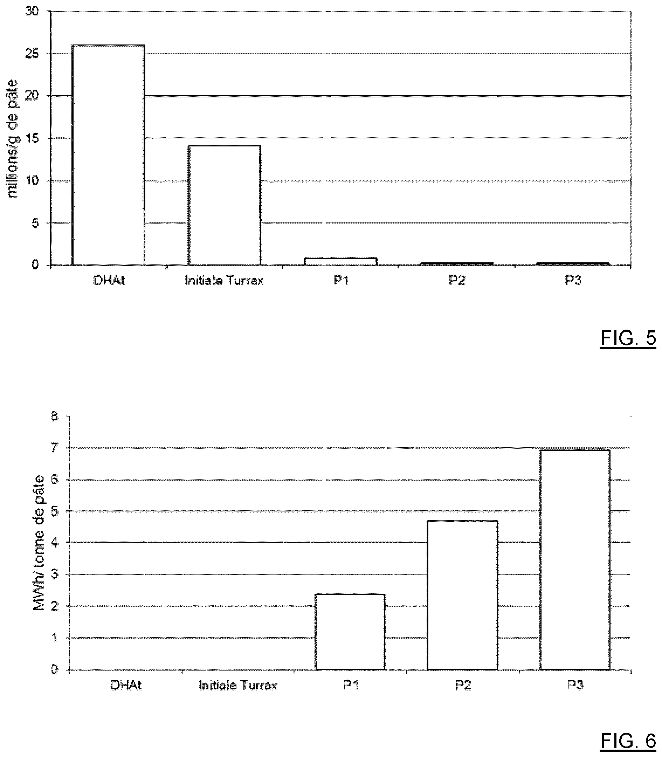

La suspension aqueuse de fibres de cellulose oxydées est mélangée par Ultra Turrax pendant 10 minutes. Une diminution du nombre de fibre est observée suite à ce mélange. Ceci indique que le traitement DHAt a fortement fragilisé la structure de la fibre cellulosique puisqu'un simple mélange contribue à la déstructurer. Après le mélange, la suspension est introduite dans un broyeur GEA NS 3006 pour effectuer une microfibrillation mécanique à une pression de 1500 bar. Plusieurs passages successifs dans ce broyeur sont effectués afin de transformer les fibres de cellulose en cellulose microfibrillée. Dès que le taux de fibres résiduelles d'une longueur supérieure à 80 micromètres ($\mu$m) est faible, le traitement mécanique au broyeur est arrêté. Les fibres de cellulose oxydée par le procédé DHAt présentent un bon comportement dans le broyeur : aucune obstruction n'a été observée et la pression maximale de 1500 bar a pu être atteinte. Après deux passages P1 et P2, les fibres ont totalement disparu, pour laisser place à de la cellulose microfibrillée, comme illustré en figure 5.

Avant le procédé DHAt, les fibres lignocellulosiques de la pâte écrue présentent une longueur moyenne de 2125 $\mu$m. À l'issue du procédé DHAt, cette longueur diminue pour atteindre 200 $\mu$m. Ce procédé permet donc une déconstruction efficace de la structure initiale de la fibre lignocellulosique de la pâte cellulosique écrue, avec très peu de fibres résiduelles.

Le traitement mécanique dans le broyeur a consommé une énergie de 4,7 MWh/t de pâte, après deux passages P1 et P2 dans le broyeur, comme illustré en figure 6. Ceci correspond aux niveaux d'énergie dépensés pour le broyage mécanique des pâtes blanchies standards qui ont subi un traitement TEMPO conventionnel (TEMPO/NaOCl/NaBr).

La suspension obtenue après les deux passages dans le broyeur P1 et P2 a été utilisée pour produire des films de 50 g/m$^2$ à l'aide d'un appareil standard à formette équipé d'une toile et d'une membrane de porosité 0,65 $\mu$m. Les propriétés mécaniques et optiques des films produits sont analysées. Les films produits à partir de la cellulose microfibrillée ainsi obtenue sont très transparents, moins voilés et plus nets que les films issus de cellulose microfibrillée obtenue selon les procédés standards. Leurs propriétés optiques semblent donc très intéressantes.

En outre, la suspension obtenue après les deux passages P1 et P2 peut être utilisée pour produire des aérogels. Ces aérogels sont produits par remplacement de l'eau par le solvant 2-méthylpropan-2-ol en mélangeant la suspension avec ce solvant. L'eau et le 2-méthylpropan-2-ol sont éliminés par centrifugation. Le remplacement de l'eau par ce solvant et la centrifugation sont effectués trois fois successivement afin d'éliminer les traces d'eau. La suspension restante est alors lyophilisée pour former l'aérogel.

L'invention n'est pas limitée aux modes de réalisations précédemment décrits et s'étend à tous les modes de réalisation couverts par les revendications.

On peut notamment prévoir que la pâte lignocellulosique écrue soit fournie au réacteur, en mélange avec de l'eau afin d'obtenir une concentration en matière sèche supérieure à 6 %, et par exemple comprise entre 8 et 12 %. Pour ces gammes de concentration en matière sèche, on peut notamment prévoir que le dispositif d'agitation du réacteur soit remplacé par un mélangeur avec pompe mettant en circulation le milieu réactionnel dans le réacteur.

**LISTE DES REFERENCES**

1 Procédé d'oxydation catalytique
10 Fournir la pâte lignocellulosique écrue
10' Mesurer l'indice kappa d'une pâte lignocellulosique écrue
11 Fournir un radical nitroxyle hétérocyclique
12 Fournir un excès molaire de dioxyde de chlore
13 Fournir un hypochlorite
14 Récupérer les fibres de cellulose oxydées
14' Laver les fibres de cellulose récupérées
15 Équilibre de la réaction de délignification
16 Réguler le pH
17 Acidification du milieu réactionnel
18 Récupérer l'effluent
2 Procédé de production de cellulose microfibrillée
20 Microfibriller les fibres de cellulose
3 Montage expérimental
30 Réacteur thermostaté
31 Dispositif d'agitation
32 Sonde de pH
33 Sonde de température

34 Ligne d'ajout de dioxyde de chlore et du radical nitroxyle hétérocyclique
35 Ligne d'ajout de d'hypochlorite
36 Ligne d'ajout de solution acide
37 Ligne d'ajout de solution basique
38 Vanne de récupération

**Revendications**

1. Procédé (1) d'oxydation catalytique d'une pâte cellulosique écrue, le procédé (1) comprenant les étapes suivantes :

   • Fournir (10), dans un réacteur, une pâte cellulosique écrue, la pâte cellulosique écrue comprenant des fibres de cellulose lignifiées ;
   • Fournir (11), dans le réacteur, un radical nitroxyle hétérocyclique ;
   • Fournir (12), dans le réacteur, du dioxyde de chlore de façon à former un milieu réactionnel, le pH du milieu réactionnel étant supérieur à 7, le dioxyde de chlore étant fourni (12) en excès par rapport au radical nitroxyle hétérocyclique de façon à :

   ◦ induire une activation du radical nitroxyle hétérocyclique par le dioxyde de chlore, par conversion du radical nitroxyle hétérocyclique en un cation nitrosonium hétérocyclique ; et
   ◦ induire dans le milieu réactionnel une délignification au moins partielle de la pâte cellulosique écrue par réaction entre la lignine et le dioxyde de chlore ;

   • Fournir (13), au milieu réactionnel, suite à l'activation du radical nitroxyle hétérocyclique par le dioxyde de chlore, un hypochlorite de façon à induire une oxydation catalytique des fibres de cellulose par le cation nitrosonium hétérocyclique ;
   • Récupérer (14), à l'issue de l'oxydation catalytique des fibres de cellulose, les fibres de cellulose oxydées et au moins partiellement délignifiées.

2. Procédé (1) selon la revendication précédente, dans lequel le dioxyde de chlore est fourni (12) dans une quantité molaire de matière $n_1$ sensiblement supérieure ou égale à la somme de la quantité molaire de matière $n_2$ du radical nitroxyle hétérocyclique, et d'une quantité molaire de matière proportionnelle au taux de lignine de la pâte cellulosique écrue.

3. Procédé (1) selon l'une quelconque des revendications précédentes, dans lequel le dioxyde de chlore est fourni (12) dans une quantité molaire de matière $n_1$ sensiblement supérieure ou égale à la somme de la quantité molaire de matière $n_2$ du radical nitroxyle hétérocyclique, et d'une quantité molaire de matière proportionnelle à l'indice kappa de la pâte cellulosique écrue.

4. Procédé (1) selon la revendication précédente, dans lequel la quantité molaire de matière $n_1$ de dioxyde de chlore fourni (12) est sensiblement supérieure ou égale à, en mmol/g de pâte cellulosique écrue sèche

$$n_2 + \left( \frac{Ex \times F \times A}{B \times M_{ClO2}} \times I_k \right)$$

   Ik correspondant à l'indice kappa de la pâte cellulosique écrue, Ex correspondant à un facteur d'excès compris entre 1 et 3,5, F correspondant au facteur chlore, F étant compris entre 0,1 et 0,5, A étant égal à 10, B étant égal à 2,63 et MClO2 correspondant à la masse molaire du dioxyde de chlore exprimée en g/mol.

5. Procédé (1) selon l'une quelconque des revendications 3 et 4, dans lequel l'indice kappa de la pâte cellulosique écrue est compris entre 6 et 60.

6. Procédé (1) selon l'une quelconque des revendications précédentes, dans lequel le radical nitroxyle hétérocyclique et le dioxyde de chlore sont mélangés entre eux avant d'être fournis (11, 12) dans le réacteur.

7. Procédé (1) selon l'une quelconque des revendications précédentes, dans lequel l'hypochlorite est fourni (13) après que la délignification de la pâte cellulosique écrue, par réaction entre la lignine et le dioxyde de chlore, a atteint son équilibre.

8. Procédé (1) selon l'une quelconque des revendications précédentes, dans lequel, lorsque dioxyde de chlore est fourni (12), et/ou lors de l'oxydation catalytique des fibres de cellulose, le pH du milieu réactionnel est compris entre 8 et 11.

9. Procédé (1) selon l'une quelconque des revendications précédentes, dans lequel, lorsque dioxyde de chlore est fourni (12), et/ou lors de l'oxydation catalytique des fibres de cellulose, la température du milieu réactionnel est comprise entre 20°C et 50°C, de préférence entre 25°C et 40°C.

10. Procédé (1) selon l'une quelconque des revendications précédentes, le procédé comprenant en outre une étape d'acidification (17) du milieu réactionnel à la suite de l'oxydation catalytique des fibres de cellulose et avant l'étape de récupération (14) des fibres de cellulose oxydées, l'étape d'acidification étant exempte d'une étape préalable de lavage du milieu réactionnel.

11. Procédé (1) selon la revendication précédente, dans lequel l'étape d'acidification (17) est exempte d'ajout d'un réactif oxydant dans le réacteur.

12. Procédé (1) selon l'une quelconque des revendications 10 et 11, dans lequel, lors de l'étape d'acidification (17), le pH du milieu réactionnel est compris entre 3 et 5.

13. Procédé (1) selon l'une quelconque des revendications 10 à 12, dans lequel, lors de l'étape d'acidification, la température du milieu réactionnel est comprise entre 50 et 80°C.

14. Procédé (1) selon l'une quelconque des revendications précédentes, le procédé comprenant en outre, suite à l'étape de récupération (14) des fibres de cellulose oxydées, une étape de récupération (18) d'au moins un effluent destiné à être réintroduit dans un procédé de blanchiment de pâte papetière.

15. Procédé (2) de production de cellulose microfibrillée, le procédé comprenant :

• un procédé (1) d'oxydation catalytique d'une pâte cellulosique écrue, selon l'une quelconque des revendications 1 à 14 ;
• une étape de microfibrillation (20) des fibres de cellulose oxydées pour obtenir une suspension comprenant de la cellulose microfibrillée.

**Patentansprüche**

1. Verfahren (1) zur katalytischen Oxidation einer rohen Zellulosemasse, wobei das Verfahren (1) die folgenden Schritte umfasst:

• Zuführen (10) einer rohen Zellulosemasse in einen Reaktor, wobei die rohe Zellulosemasse verholzte Zellulosefasern umfasst;
• Zuführen (11) eines heterozyklischen Nitroxylradikals in den Reaktor;
• Zuführen (12) von Chlordioxid in den Reaktor, um ein Reaktionsmedium zu bilden, wobei der pH-Wert des Reaktionsmediums über 7 liegt, wobei das Chlordioxid im Vergleich zu dem heterozyklischen Nitroxylradikal für Folgendes überschüssig zugeführt (12) wird:

◦ Induzieren einer Aktivierung des heterozyklischen Nitroxylradikals durch Chlordioxid durch Umwandlung des heterozyklischen Nitroxylradikals in ein heterozyklisches Nitrosoniumkation; und
◦ Induzieren einer mindestens teilweise Delignifizierung der rohen Zellulosemasse in dem Reaktionsmedium durch Reaktion zwischen Lignin und Chlordioxid;

• Zuführen (13) eines Hypochlorits in das Reaktionsmedium nach der Aktivierung des heterozyklischen Nitroxylradikals durch Chlordioxid, um eine katalytische Oxidation der Zellulosefasern durch das heterozyklische Nitrosoniumkation zu induzieren;
• nach der katalytischen Oxidation der Zellulosefasern, Zurückgewinnen (14) der oxidierten und mindestens teilweise delignifizierten Zellulosefasern.

**2.** Verfahren (1) nach dem vorhergehenden Anspruch, wobei das Chlordioxid in einer Molmenge n1 an Stoff zugeführt (12) wird, die im Wesentlichen größer oder gleich der Summe der Molmenge n2 an Stoff des heterozyklischen Nitroxylradikals und einer Molmenge an Stoff ist, die proportional zu dem Ligningehalt der rohen Zellulosemasse ist.

**3.** Verfahren (1) nach einem der vorhergehenden Ansprüche, wobei das Chlordioxid in einer Molmenge n1 an Stoff zugeführt (12) wird, die im Wesentlichen größer oder gleich der Summe der Molmenge n2 an Stoff des heterozyklischen Nitroxylradikals und einer Molmenge an Stoff ist, die proportional zu dem Kappa-Index der rohen Zellulosemasse ist.

**4.** Verfahren (1) nach dem vorhergehenden Anspruch, wobei die Molmenge n1 an Stoff des zugeführten (12) Chlordioxids in mmol/g im Wesentlichen größer gleich einer trockenen rohen Zellulosemasse ist

$$n_2 + \left( \frac{Ex \times F \times A}{B \times M_{ClO2}} \times I_k \right)$$

wobei Ik dem Kappa-Index der rohen Zellulosemasse entspricht, Ex einem Überschussfaktor zwischen 1 und 3,5 entspricht, F dem Chlorfaktor entspricht, wobei F zwischen 0,1 und 0,5 liegt, A gleich 10 ist, B gleich 2,63 ist und MCIO2 der Molmasse des Chlordioxids in g/mol entspricht.

**5.** Verfahren (1) nach einem der Ansprüche 3 und 4, wobei der Kappa-Index der rohen Zellulosemasse zwischen 6 und 60 liegt.

**6.** Verfahren (1) nach einem der vorhergehenden Ansprüche, wobei das heterozyklische Nitroxylradikal und das Chlordioxid miteinander vermischt werden, bevor sie dem Reaktor zugeführt (11, 12) werden.

**7.** Verfahren (1) nach einem der vorhergehenden Ansprüche, wobei das Hypochlorit zugeführt (13) wird, nachdem die Delignifizierung der rohen Zellulosemasse durch Reaktion zwischen Lignin und Chlordioxid ihr Gleichgewicht erreicht hat.

**8.** Verfahren (1) nach einem der vorhergehenden Ansprüche, wobei, wenn Chlordioxid zugeführt (12) wird, und/oder bei der katalytischen Oxidation der Zellulosefasern, der pH-Wert des Reaktionsmediums zwischen 8 und 11 liegt.

**9.** Verfahren (1) nach einem der vorhergehenden Ansprüche, wobei, wenn Chlordioxid zugeführt (12) wird, und/oder bei der katalytischen Oxidation der Zellulosefasern, die Temperatur des Reaktionsmediums zwischen 20 °C und 50 °C, vorzugsweise zwischen 25 °C und 40 °C, liegt.

**10.** Verfahren (1) nach einem der vorhergehenden Ansprüche, wobei das Verfahren ferner einen Schritt des Ansäuerns (17) des Reaktionsmediums nach der katalytischen Oxidation der Zellulosefasern und vor dem Schritt des Rückgewinnens (14) der oxidierten Zellulosefasern umfasst, wobei der Ansäuerungsschritt frei von einem vorherigen Schritt des Waschens des Reaktionsmediums ist.

**11.** Verfahren (1) nach dem vorhergehenden Anspruch, wobei der Ansäuerungsschritt (17) frei von der Zugabe eines Oxidationsmittels in den Reaktor ist.

**12.** Verfahren (1) nach einem der Ansprüche 10 und 11, wobei bei dem Ansäuerungsschritt (17) der pH-Wert des Reaktionsmediums zwischen 3 und 5 liegt.

**13.** Verfahren (1) nach einem der Ansprüche 10 bis 12, wobei bei dem Ansäuerungsschritt die Temperatur des Reaktionsmediums zwischen 50 und 80 °C liegt.

**14.** Verfahren (1) nach einem der vorhergehenden Ansprüche, wobei das Verfahren ferner nach dem Schritt des Rückgewinnens (14) der oxidierten Zellulosefasern einen Schritt des Rückgewinnens (18) mindestens eines Abwassers umfasst, das zu der Wiedereinführung in ein Zellstoffbleichverfahren bestimmt ist.

**15.** Verfahren (2) zur Herstellung von mikrofibrillierter Zellulose, wobei das Verfahren Folgendes umfasst:

• ein Verfahren (1) zur katalytischen Oxidation einer rohen Zellulosemasse nach einem der Ansprüche 1 bis 14;

• einen Schritt des Mikrofibrillierens (20) der oxidierten Zellulosefasern, um eine Suspension zu erhalten, die mikrofibrillierte Zellulose umfasst.

**Claims**

1. A method (1) for catalytically oxidising an unbleached cellulosic pulp, the method (1) comprising the following steps:

   • Providing (10), in a reactor, an unbleached cellulosic pulp, the unbleached cellulosic pulp comprising lignified cellulose fibres;
   • Providing (11), in the reactor, a heterocyclic nitroxyl radical;
   • Providing (12), in the reactor, chlorine dioxide so as to form a reaction medium, the pH of the reaction medium being greater than 7, the chlorine dioxide being provided (12) in excess with respect to the heterocyclic nitroxyl radical so as to:

      ◦ induce activation of the heterocyclic nitroxyl radical by chlorine dioxide, by converting the heterocyclic nitroxyl radical into a heterocyclic nitrosonium cation; and
      ◦ induce in the reaction medium at least partial delignification of the unbleached cellulosic pulp by reaction between lignin and chlorine dioxide;

   • Providing (13), to the reaction medium, following activation of the heterocyclic nitroxyl radical by the chlorine dioxide, a hypochlorite so as to induce a catalytic oxidation of the cellulose fibres by the heterocyclic nitrosonium cation;
   • Recovering (14), after the catalytic oxidation of the cellulose fibres, the cellulose fibres oxidised and at least partially delignified.

2. The method (1) according to the preceding claim, wherein the chlorine dioxide is provided (12) in a molar amount of material $n1$ substantially greater than or equal to the sum of the molar amount of material $n2$ of the heterocyclic nitroxyl radical, and a molar amount of material proportional to the lignin level of the unbleached cellulosic pulp.

3. The method (1) according to any one of the preceding claims, wherein the chlorine dioxide is provided (12) in a molar amount of material $n1$ substantially greater than or equal to the sum of the molar amount of material $n2$ of the heterocyclic nitroxyl radical, and a molar amount of material proportional to the kappa number of the unbleached cellulosic pulp.

4. The method (1) according to the preceding claim, wherein the molar amount of material $n1$ of chlorine dioxide provided (12) is substantially greater than or equal to, in mmol/g of dry unbleached cellulosic pulp

$$n_2 + \left( \frac{Ex \times F \times A}{B \times M_{ClO2}} \times I_k \right)$$

Ik corresponding to the kappa number of the unbleached cellulosic pulp, Ex corresponding to an excess factor between 1 and 3.5, F corresponding to the chlorine factor, F being between 0.1 and 0.5, A being equal to 10, B being equal to 2.63 and MClO2 corresponding to the molar mass of chlorine dioxide expressed in g/mol.

5. The method (1) according to any one of claims 3 and 4, wherein the kappa number of the unbleached cellulosic pulp is between 6 and 60.

6. The method (1) according to any one of the preceding claims, wherein the heterocyclic nitroxyl radical and the chlorine dioxide are mixed with each other before being provided (11, 12) in the reactor.

7. The method (1) according to any one of the preceding claims, wherein the hypochlorite is provided (13) after delignification of the unbleached cellulosic pulp, by reaction between lignin and chlorine dioxide, has reached its equilibrium.

8. The method (1) according to any one of the preceding claims, wherein, when chlorine dioxide is provided (12), and/or during the catalytic oxidation of the cellulose fibres, the pH of the reaction medium is between 8 and 11.

9. The method (1) according to any one of the preceding claims, wherein, when chlorine dioxide is provided (12), and/or during the catalytic oxidation of the cellulose fibres, the temperature of the reaction medium is between 20°C and 50°C, preferably between 25°C and 40°C.

10. The method (1) according to any one of the preceding claims, the method further comprising a step of acidifying (17) the reaction medium following the catalytic oxidation of the cellulose fibres and before the step of recovering (14) the cellulose fibres oxidised, the acidification step being free of a prior step of washing the reaction medium.

11. The method (1) according to the preceding claim, wherein the acidification step (17) is free of adding an oxidising reagent in the reactor.

12. The method (1) according to any one of claims 10 and 11, wherein, during the acidification step (17), the pH of the reaction medium is between 3 and 5.

13. The method (1) according to any one of claims 10 to 12, wherein, during the acidification step, the temperature of the reaction medium is between 50 and 80°C.

14. The method (1) according to any one of the preceding claims, the method further comprising, following the step of recovering (14) the cellulose fibres oxidised, a step of recovering (18) at least one effluent to be reintroduced into a paper pulp bleaching process.

15. A method (2) for producing microfibrillated cellulose, the method comprising:

• a method (1) for catalytically oxidising an unbleached cellulosic pulp, according to any one of claims 1 to 14;
• a step of microfibrillating (20) the cellulose fibres oxidised to obtain a suspension comprising microfibrillated cellulose.

FIG. 1

FIG. 2

EP 4 081 555 B1

FIG. 3

21

1, 2

10'
Mesurer l'indice Kappa d'une pâte cellulosique écrue

10
Fournir la pâte cellulosique écrue

11
Fournir un radical nitroxyle hétérocyclique

12
Fournir un excès molaire de dioxyde de chlore

11, 12
Fournir un mélange d'un radical nitroxyle hétérocyclique et d'un excès molaire de dioxyde de chlore

12
Fournir un excès molaire de dioxyde de chlore

11
Fournir un radical nitroxyle hétérocyclique

16

15
Équilibre de la réaction de délignification

13
Fournir un hypochlorite

16

17
Acidification du milieu réactionnel

14
Récupérer les fibres de cellulose oxydées

18
Récupérer l'effluent

14'
Laver les fibres de celluloses récupérées

20
Microfibriller les fibres de cellulose

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014091086 A1

**Littérature non-brevet citée dans la description**

- **A. ISOGAI et al.** TEMPO-oxidized cellulose nano-fibers. *Nanoscale*, 2011, vol. 3 (1), 71-85